# EUROPEAN PATENT SPECIFICATION

(11) **EP 1 792 103 B1**
(45) Date of publication and mention of the grant of the patent: **11.01.2012**
(21) Application number: 05789894.2
(22) Date of filing: 08.09.2005
(51) Int. Cl.: F16H 21/22, F16C 3/18, F02B 75/32

(54) **ECCENTRIC CONNECTING ROD SYSTEM PREFERABLY FOR INTERNAL-COMBUSTION ENGINES**
EXZENTRISCHES VERBINDUNGSSTANGENSYSTEM, VORZUGSWEISE FÜR VERBRENNUNGSMOTOREN
SYSTEME DE BIELLE EXCENTRIQUE, DE PREFERENCE, POUR MOTEURS A COMBUSTION INTERNE

(30) Priority: 10.09.2004 IT VR20040142
(43) Date of publication of application: 06.06.2007
(73) Proprietor: Garavello, Renato, 36050 Sovizzo (IT)
(72) Inventor: Garavello, Renato, 36050 Sovizzo (IT)
(74) Representative: Fisauli, Beatrice A. M.
(86) International application number: PCT/IB2005/002657
(87) International publication number: WO 2006/027670

(56) References cited:
- WO-A-03/104666
- DE-A1- 3 109 005
- FR-A- 2 414 122
- US-A- 2 391 725
- US-B1- 6 202 622

## Description

The object of this invention patent is an eccentric connection system between connecting rod and crankshaft for devices such as internal-combustion engines, engines for presses, steam-operated devices and others.

The system involved calls for having the connecting rod bearing work eccentrically on the crankshaft, generally enbloc with the drive shaft, so that there is already torque at top dead center.

For example the eccentric connection that is the object of the patent can be used in the connection between connecting rod and crankshaft, enbloc with the drive shaft, in internal-combustion engines.

As is known, in fact, an internal-combustion engine calls for a cylindrical combustion chamber inside which a cylinder can perform longitudinal movement and which cylinder is, in its turn, connected by a connecting rod and a crankshaft to the drive shaft. In this way the reciprocating motion of the cylinder inside the combustion chamber is converted into circular motion usually used for vehicle traction or for other purposes.

The combustion engine, generally called an internal-combustion engine, calls for formation, before the start of combustion, of a mixture of air with all the fuel destined for the combustion cycle, with ignition of the mixture using artificial means and with subsequent propagation of the flame to the entire remaining mixture.

Classic internal-combustion engines can be subdivided into two different types: four-stroke engines and two-stroke engines.

In the case of four-stroke engines the combustion cycle consists of a 720° rotation of the drive shaft, meaning two round-angle revolutions, which are composed of six distinct phases subdivided into the four strokes described as follows:
- a first 180° rotation corresponds to downwards movement of the piston in the cylindrical combustion chamber with intake of the air-fuel mixture into the combustion chamber;
- a second 180° rotation corresponds to upwards movement by the piston in the combustion chamber during which the mixture is compressed and, when the piston approaches its highest point, combustion of the mixture begins, ignited by a spark;
- a third 180° rotation corresponds to downwards movement by the piston in the combustion chamber, during which combustion terminates and the burnt gases expand and exhausting starts to take place;
- a fourth and final 180° rotation corresponds to upwards movement by the piston in the combustion chamber during which all the remaining combustion residues are expelled from the cylindrical chamber itself.

As far as two-stroke engines are concerned, these different phases are concentrated into a single round-angle 360° rotation. During the first phase, while the piston moves downwards, both combustion and expansion phases take place. The exhaust phase for the gases that are generated starts towards the end of this downwards stroke in the combustion chamber and the cylindrical chamber is filled with the mixture to be ignited. Subsequently, when the piston returns to its highest point, mixture is drawn in the sump, placed below the cylinder, and compression takes place in the cylinder.

As it is easy to understand one of the most delicate points during drive shaft rotation is when the piston is located at its lowest point in its stroke inside the cylindrical chamber. This position is called bottom dead center.

An even more delicate point is when the piston is located in its highest position inside the combustion chamber, meaning the top dead center, since ignition of the mixture ("explosion"), which takes place in advance with respect to this top dead center, causes severe stresses on the drive shaft.

In fact in the classic configuration of a connecting rod with respect to the drive shaft at the time of "explosion", ideally at top dead center, we have a shear force, generated by the piston, in a straight line direction passing through the drive shaft which, without generating torque, stresses the shaft and its bearings.

As the piston proceeds in its motion the force exerted by the piston moves its straight line direction and generates torque on the drive shaft, causing it to rotate.

It is consequently clear that study of said top dead center requires special attention both to decrease improper stresses on the drive shaft and to increase the efficiency of the engine itself.

Many improvements have been examined to overcome the problems described previously, employing different technologies and approaches.

Engine performances, for example, have been improved by introducing chemical changes to fuels and, consequently, to the mixtures that are used by the engines. These generate improved performance but also cause an increase in toxic gases and greater environmental pollution.

Attempts have also been made to improve engines using electronic systems or systems equipped with turbocompressors. These consequently increase production costs and, above all, generate highly sophisticated mechanisms with obvious problems with regulation and operation.

The purpose and function of this invention is to provide a mechanical improvement to the traditional internal-combustion engine using an eccentric connection for the connecting rod to the crankshaft so that there will already be torque at top dead center.

It is known from FR-A-2 414 122 an internal combustion engine wherein the connecting rod of the piston is connected to the crank through an eccentric system. Said eccentric system is made of a first pin fixed in an eccentric position to a second pin. The first pin is rotatably coupled to the end of the crank and the second pin is rotatably placed inside the head of the connecting rod.

The object of this invention is therefore having an eccentric connection between the connection rod and the drive shaft determined by the fact that, at top dead center, the connecting rod- crankshaft mechanism has a displacement arm so that, while the connection rod is kept axially aligned with the drive shaft bearings the actual point of anchorage by the connection rod to the shaft is displaced by a specific angle and consequently the explosion force generated during the expansion phase creates, already at top dead center, substantial torque and wherein the actual anchorage point (6) of connecting rod (2) to drive shaft (3) is present on a connecting rod - drive shaft connection pin (4), said actual anchorage point (6) being positioned in a lateral part of original piston pin (5) with respect to the axis of symmetry passing through the center of drive shaft (3) and said anchorage point (6) being restrained to circumference (13) described by the radius of rotation of the crankshaft enbloc with drive shaft (3), a suitably profiled element (15) designed to connect to pin (4) being inserted in the opening of piston pin (5), said element (15) being fixed to the drive shaft (3), so that the connection pin (4) moves together with and fixed to the drive shaft (3).

Other characteristics and details of the invention can be better understood by the following description, given as an example but without being exclusive, that refers to the attached drawings wherein:
- fig. 1: shows the eccentric connection of the connection rod to the drive shaft at the start of the system cycle, meaning at top dead center;
- fig. 2: shows the connecting rod - drive shaft configuration after the drive shaft rotates 90° with respect to top dead center;
- fig. 3: shows the eccentric connection or the connection rod to the drive shaft at bottom dead center;
- fig. 4: shows the connecting rod - drive shaft configuration after the drive shaft rotates 90° with respect to bottom dead center;
- fig. 5: shows a diagram of the positions defined by the eccentric anchorage of the connection rod to the drive shaft;
- fig. 6: shows the connection rod - drive shaft eccentric connection diagram, identifying the displacement angle;
- fig. 7: gives a perspective schematic view of the connection rod - drive shaft eccentric system;
- fig. 8: gives a perspective exploded schematic view of the eccentric system;

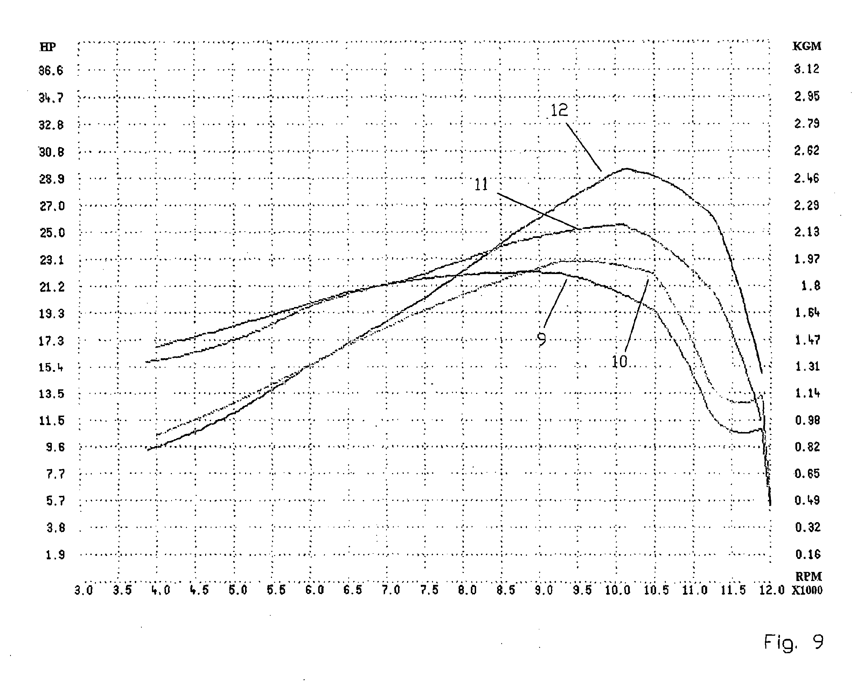

- fig. 9: gives a graph comparing the engine with a traditional connection and the same engine with an eccentric connection as is the object of this patent.

With reference to the attached drawings the number 1 indicates the eccentric system object of the invention, in one of its embodiments, composed of the special connection to drive shaft 3 by connecting rod 2.

In fact pin 4, the actual anchorage of the connecting rod to the drive shaft, has its geometric center of gravity 6 in a lateral part of original piston pin 5 of connecting rod 2, said geometric center of gravity being restrained to circumference 13 described by the radius of rotation of the crankshaft.

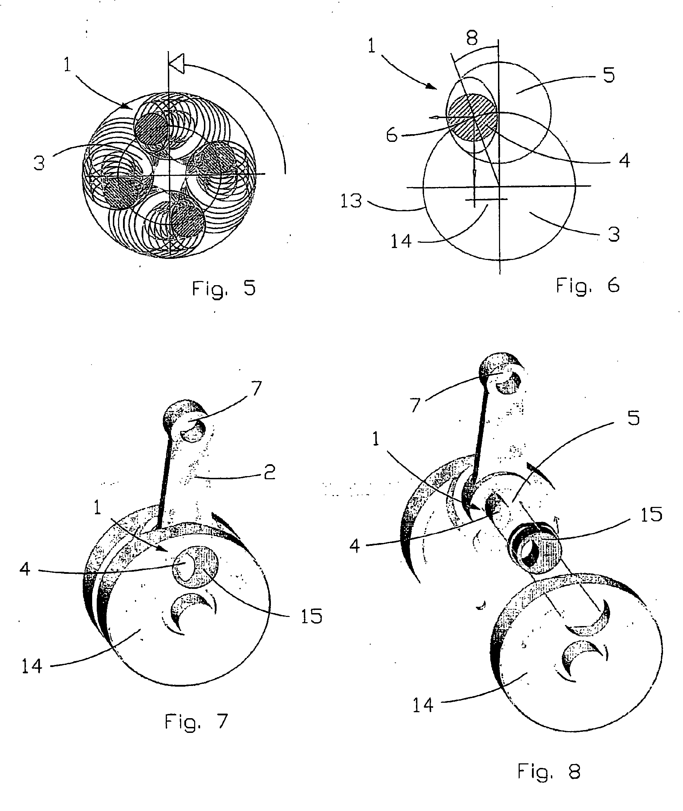

More specifically we can note schematization of eccentric connection 1 of figure 6 which illustrates the position of the various connection components when the connecting rod - piston system is at top dead center.

This same figure 6 defines displacement angle. 8 which is between the vertical straight line that joins the axis of rotation of the drive shaft to the center of the connecting rod - cylinder connection and the straight line that joins the axis of rotation of the drive shaft to center of gravity of pin 4 which is the actual anchorage of the connecting rod to the drive shaft.

It is evident that with the eccentric system in question, at top dead center, the connecting rod - crankshaft mechanism already has displacement arm 14 since, while keeping connecting rod 2 axially aligned with drive shaft bearings 3, the actual point of anchorage 6 of the connection rod 2 to drive shaft 3 is moved from a perfectly vertical axis of an angle 8 and consequently the explosion force (expansion) generates substantial torque.

By positioning the actual anchorage center of gravity of connecting rod 2 to drive shaft 3, as previously described, we generate a "natural start" to rotation and consequent rapidity of the drive shaft in gaining rotary momentum.

When we calculate the value to assign to displacement angle 8 we must consider a compromise of having to position pin 4, and consequently actual anchorage point 6 of connecting rod 2 itself, to drive shaft 3 inside the original section of piston pin 5.

Calculating this restraint we deduce that angle 8 depends in size on the cross section of piston pin 5 that is used in the connecting rod and by the safety limit desired from the cross section of pin 4 that is anchored to shaft 3.

Displacement angle 8 is consequently defined based on the desired dynamic effect and on obtaining a cross section of pin 4 sufficient for the work load, since said cross section of pin 4 is placed inside the cross section of piston pin 5.

In addition the eccentric system that is the object of this patent can be performed on newly designed drive shafts but can also be performed on existing drive shafts in traditional engines by making suitable and simple changes to the drive shaft itself and by inserting, in the opening of piston pin 5, a suitably profiled element 15 designed to connect to pin 4.

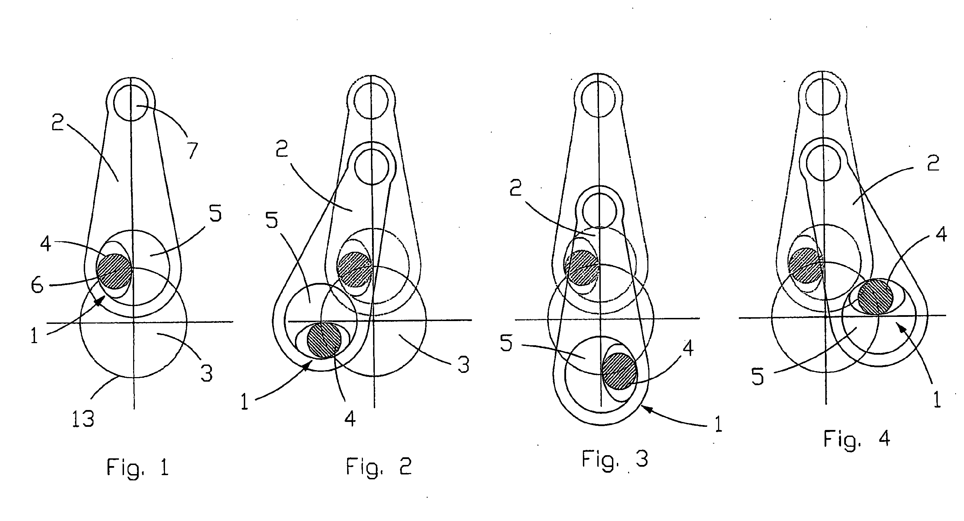

Figures 1, 2, 3 and 4 show counterclockwise rotation of drive shaft 3 and consequent positioning of pin 4 with respect to piston pin 5.

In particular we can see the position of connection 1 to top dead center as in figures 1 and 6: in this configuration, in fact, connecting rod 2 exerts a vertical force downwards that discharges on the connecting rod - engine connection, theoretically assimilated as center of gravity of pin 4.

Therefore whereas in traditional structures the force exerted by the connecting rod lies on the straight line that passes through the axis of rotation of the drive shaft, exerting a simple shear force on the drive shaft itself, in the configuration with eccentric system the force in question has displacement arm 14 with respect to the center of the drive shaft, generating torque.

Therefore thanks to eccentric connection 1, object of this invention, we already have torque at top dead center with consequent improvements in torque and power, generated in a smooth and strong manner and constantly increasing over the entire space of use of engine revolutions.

This improvement in engine performance has been experimentally tested and the results are shown in the graph in figure 7. The engine that was used was a 2-stroke 125 cc racing engine, selected to test the resistance, strength and durability of the system in extreme operating conditions.

First torque and power values were recorded at the engine wheel in the standard configuration without the eccentric system and subsequently those of the engine with the eccentric system object of this invention patent and inserted inside the original cross section of a piston pin with a 22 mm diameter. In this latter case the engine was reassembled exactly in the state of the first reference test, performed without eccentric system, and using the same fuel.

Substantial improvements were encountered in favor of the eccentric connection system, both concerning torque, with results rising from the 1.9 kgm of the traditional system to 2.2 kgm of the eccentric system, with a 16% improvement, and concerning power, with values increasing from 23.1 HP to 29.7 HP and a 28% improvement.

In addition the graph in figure 7 shows the large progress in the curves illustrating the ratio between RPM and torque 11 and between RPM and power 12 with respect to curves 9, 10 the engine with traditional connecting rod - drive shaft anchorage system. Curves 11, 12, showing engine performance with the eccentric system, express a continuous and constantly increasing trend with excellent on-road engine performance.

Consequently using the eccentric system object of this patent, the connecting rod - crankshaft mechanism already has at top dead center, displacement arm 14, with respect to angle 8, because connecting rod 2, while it remains axially aligned with the drive shaft bearings, has its actual point of anchorage 6 displaced by angle 8 and, consequently, a torque is generated by the explosion force and during the expansion phase.

We also point out the possibility of using the eccentric connection system not only in internal-combustion engines but also in all those devices that have reciprocating motion transformed into rotary motion or viceversa.

## Claims

1. System of connecting rod - drive shaft connection originally connected by an original piston pin wherein it comprises an eccentric connection (1) between the connecting rod (2) and the drive shaft (3) determined by the fact that the connecting rod - crankshaft mechanism, at top dead center, while it maintains connecting rod (2) axially aligned with drive shaft bearings, has displacement arm (14) because actual anchorage point (6) of connecting rod (2) to drive shaft (3) is displaced by displacement angle (8) with respect to the vertical axis so that the explosion force generated during the expansion phase creates, already at top dead center, substantial torque
and wherein the actual anchorage point (6) of connecting rod (2) to drive shaft (3) is present on a connecting rod - drive shaft connection pin (4), said actual anchorage point (6) being positioned in a lateral part of the original cross section of the original piston pin with respect to the axis of symmetry passing through the center of drive shaft (3) and said anchorage point (6) being restrained to circumference (13) described by the radius of rotation of the original piston pin,
**characterized by** the fact that it comprises
a suitably profiled element (15) designed to connect to pin (4) and being inserted in the opening of the original piston pin , said element (15) being fixed to the drive shaft (3), so that the connection pin (4) moves together with and fixed to the drive shaft (3).

2. System of connecting rod - drive shaft connection according to the preceding claim **characterized by** the fact that displacement angle (8) depends on the safety limit, related to the cross section of pin (4), that is desired for the system and on the size of the cross section of piston pin (5) since pin (4), and consequently actual anchorage point (6) of connecting rod (2) to drive shaft (3), must be placed inside the original cross section of the original piston pin.

3. System of connecting rod - drive shaft connection according to the preceding claims **characterized by** the fact that it already has torque at top dead center with consequent improvements in torque and power, generated in a smooth and strong manner and constantly increasing over the entire space of use of engine revolutions.

4. System of connecting rod - drive shaft connection according to the preceding claims **characterized by** the fact that it can not only be used in internal-combustion engines but also in all those devices that use a connecting rod - crankshaft mechanism such as engines for generators, engines for presses, steam-operated devices and others.

## Patentansprüche

1. System zum Verbinden einer Pleuel-Antriebswellen-Verbindung, die ursprünglich durch einen originalen Kolbenbolzen verbunden ist, wobei das System eine Exzenterverbindung (1) zwischen dem Pleuel (2) und der Antriebswelle (3) umfasst, die durch die Tatsache bestimmt wird, dass der Pleuel-Kurbelwellen-Mechanismus am oberen Totpunkt, während das Pleuel (2) axial mit den Antriebswellenlagern fluchtet, einen Auslenkungsarm (14) aufweist, weil ein aktueller Verankerungspunkt (6) zwischen dem Pleuel (2) und der Antriebswelle (3) um einen Auslenkungswinkel (8) relativ zu der vertikalen Achse so verschoben ist, dass die während der Expansionsphase erzeugte Explosionskraft bereits am oberen Totpunkt ein beträchtliches Drehmoment erzeugt,
und wobei sich der aktuelle Verankerungspunkt (6) zwischen dem Pleuel (2) und der Antriebswelle (3) an einem Pleuel-Antriebswellen-Verbindungsbolzen (4) befindet, wobei sich der aktuelle Verankerungspunkt (6) in einem seitlichen Teil des ursprünglichen Querschnitts des originalen Kolbenbolzens mit Bezug auf die durch die Mitte der Antriebswelle (3) verlaufende Symmetrieachse befindet und die Position des Verankerungspunktes (6) auf der Umfangslinie (13), die durch den Drehradius des originalen Kolbenbolzens beschrieben wird, gehalten wird,
**dadurch gekennzeichnet, dass** das System ein zweckmäßig profiliertes Element (15) umfasst, das dafür ausgelegt ist, mit dem Bolzen (4) verbunden zu werden, und in die Öffnung des originalen Kolbenbolzens eingesetzt ist, wobei das Element (15) so an der Antriebswelle (3) befestigt ist, dass sich der Verbindungsbolzen (4) zusammen mit der Antriebswelle (3) bewegt und daran befestigt ist.

2. System zum Verbinden einer Pleuel-Antriebswellen-Verbindung nach dem vorangehenden Anspruch, **dadurch gekennzeichnet, dass** der Auslenkungswinkel (8) von dem für das System gewünschren Sicherheitsgrenzwert, der in Zusammenhang mit dem Querschnitt des Bolzens (4) steht, sowie von der Größe des Querschnitts des Kolbenbolzens (5) abhängig ist, da der Bolzen (4) und folglich der eigentliche Verankerungspunkt (6) zwischen dem Pleuel (2) und der Antriebswelle (3) innerhalb des ursprünglichen Querschnitts des originalen Kolbenbolzens angeordnet werden muss.

3. System zum Verbinden einer Pleuel-Antriebswellen-Verbindung nach den vorangehenden Ansprüchen, **dadurch gekennzeichnet, dass** es bereits am oberen Totpunkt ein Drehmoment aufweist, woraus sich Verbesserungen beim Drehmoment und der Leistung ergeben, wobei dieses Drehmoment in einer gleichmäßigen und kraftvollen Weise erzeugt wird und über den gesamten nutzbaren Bereich der Motordrehzahl stetig zunimmt.

4. System zum Verbinden einer Pleuel-Antriebswellen-Verbindung nach den vorangehenden Ansprüchen, **dadurch gekennzeichnet, dass** es nicht nur in Verbrennungsmotoren eingesetzt werden kann, sondern in allen Maschinen, die einen Pleuel-Kurbelwellen-Mechanismus verwenden, wie zum Beispiel Motoren für Generatoren, Motoren für Pressen, Dampfmaschinen und so weiter.

## Revendications

1. Système de raccordement de type bielle/arbre d'entraînement originellement raccordé par une tige de piston d'origine, ledit système comprenant un raccordement excentrique (1) entre la bielle (2) et l'arbre d'entraînement (3) déterminé par le fait que le mécanisme à manivelle/bielle, au niveau de son point mort supérieur, tout en maintenant la bielle (2) en alignement axial avec des paliers d'arbre d'entraînement, possède un bras de déplacement (14) en raison du fait que le point d'ancrage réel (6) de la bielle (2) à l'arbre d'entraînement (3) est déplacé d'un angle de déplacement (8) par rapport à l'axe vertical de sorte que la force d'explosion générée pendant la phase d'expansion crée, déjà au niveau de son point mort supérieur, un couple de rotation important et le point d'ancrage réel (6) de la bielle (2) à l'arbre d'entraînement (3) étant présent sur une tige de raccordement bielle/arbre d'entraînement (4), ledit point d'ancrage réel (6) étant positionné dans une partie latérale de la section d'origine de la tige de piston d'origine par rapport à l'axe de symétrie passant par le centre de l'arbre d'entraînement (3) et ledit point d'ancrage (6) étant contraint à la circonférence (13) décrite par le rayon de rotation de la tige de piston d'origine,
**caractérisé par le fait qu'**il comprend
un élément de profil approprié (15) conçu pour le raccordement à la tige (4) et inséré dans l'orifice de la tige de piston d'origine, ledit élément (15) étant fixé à l'arbre d'entraînement (3), de sorte que la tige de raccordement (4) se déplace conjointement avec l'arbre d'entraînement (3) auquel elle est fixée.

2. Système de raccordement de type bielle/arbre d'entraînement selon la revendication précédente, **caractérisé par le fait que** l'angle de déplacement (8) dépend de la limite de sécurité, associée à la section de la tige (4), qui est souhaitée pour le système, et de la dimension de la section de la tige de piston (5) car la tige (4) et en conséquence le point d'ancrage réel (6) de la bielle (2) à l'arbre d'entraînement (3) doit être placé à l'intérieur de la section d'origine de la tige de piston d'origine.

3. Système de raccordement de type bielle/arbre d'entraînement selon les revendications précédentes, **caractérisé par le fait qu'**il a déjà un couple de rotation au point mort supérieur avec d'importantes améliorations de couple de rotation et de puissance, générées de manière douce et forte et augmentant constamment dans tout l'espace d'utilisation de révolutions du moteur.

4. Système de raccordement de type bielle/arbre d'entraînement selon les revendications précédentes, **caractérisé par le fait qu'**il peut non seulement être utilisé dans des moteurs à combustion interne mais également dans tous dispositifs qui utilisent un mécanisme de type bielle/manivelle tels que des moteurs pour générateurs, moteurs pour presses, dispositifs à vapeur et autres.
